# EUROPÄISCHE PATENTSCHRIFT

(11) **EP 1 843 717 B1**
(45) Veröffentlichungstag und Bekanntmachung des Hinweises auf die Patenterteilung: **23.10.2013**
(21) Anmeldenummer: 06706577.1
(22) Anmeldetag: 02.02.2006
(51) Int. Cl.: A61C 8/00

(54) **DENTALIMPLANTAT**
DENTAL IMPLANT
IMPLANT DENTAIRE

(30) Priorität: 05.02.2005 DE 102005005402
(43) Veröffentlichungstag der Anmeldung: 17.10.2007
(73) Patentinhaber: Dentsply Implants Manufacturing GmbH, 68229 Mannheim (DE)
(72) Erfinder: WOLF, Dietrich, 73447 Oberkochen (DE); KREMER, Egbert, 63454 Hanau (DE)
(74) Vertreter: Schmitt, Meinrad
(86) Internationale Anmeldenummer: PCT/EP2006/000907
(87) Internationale Veröffentlichungsnummer: WO 2006/082050

(56) Entgegenhaltungen:
- EP-A- 0 707 835
- WO-A-03/024352
- US-A- 5 782 918
- US-B1- 6 663 388

## Beschreibung

Die Erfindung bezieht sich auf ein Dentalimplantat gemäß den im Oberbegriff des Patentanspruchs 1 angegebenen Merkmalen.

Aus der US 6 663 388 B1 ist ein derartiges Dentalimplantat bekannt, welches einen Implantatkörper mit einer zentralen Aufnahmeöffnung, ein Aufbauteil mit einem in die genannte Aufnahmeöffnung eingreifenden Zapfen sowie eine Zugschraube enthält. Die Zugschraube durchgreift eine Durchgangsbohrung des Aufbauteile und ist in ein in der Aufnahmeöffnung vorgesehenes Innengewinde eingeschraubt. Die Aufnahmeöffnung enthält ferner eine konische Innenfläche mit zwei zueinander fluchtenden Konusabschnitten, zwischen welchen ein als Innenachtkant ausgebildetes erstes Indexierungselement angeordnet ist. Das Aufbauteil besitzt einen in die Aufnahmeöffnung eingreifenden Zapfen, dessen Außenfläche zwei zueinander fluchtende Konusabschnitte aufweist, wobei axial zwischen diesen ein als Außensechskant ausgebildetes zweites Indexierungselement angeordnet ist. Dieses Indexierungselement ist etwa in der Mitte des genannten Zapfens und nicht an dessen apikalen Bereich angeordnet. Der Innenachtkant des Implantatkörpers ist sowohl als Indexierungselement zur Vorgabe der Rotationsposition des Aufbauteils bezüglich des Implantatkörpers als auch als Einsetzelement für ein Werkzeug zum Einsetzen des Implantatkörpers in den Kieferknochen ausgebildet. Es besteht daher beim Einsetzen bzw. Eindrehen des Implantatkörpers in den Kiefer die Gefahr einer Beschädigung des Indexierungselements des Implantatkörpers mit der nachteiligen Folge, dass das Aufbauteil nicht mehr in der gewünschten Rotationsposition eingesetzt werden kann.

Weiterhin ist aus der US-A-5 782 918 und US 666 3388 ein Dentalimplantat, enthaltend einen Implantatkörper mit einer konischen Aufnahmeöffnung sowie ein Aufbauteil bekannt, wobei erste Indexierungselemente des Implantatkörpers als über dessen konische Innenfläche vorstehender Rippen und die zweiten Indexierungselemente des Aufbauteils als Nuten ausgebildet sind. Der Implantatkörper enthält keine zusätzlichen Einsetzelemente für ein Werkzeug, sondern die genannten Indexierungselemente sind gleichzeitig auch die Einsetzelemente für ein Werkzeug. Die Verbindung des Aufbauteils mit dem Implantatkörper erfolgt durch Aufspreizen eines zweigeteilten Zapfens des Aufbauteils mittels einer Spitze einer Spannschraube derart, dass radiale Ansätze des Zapfens in eine korrespondierende Ringnut des Implantatkörpers gepresst werden. Eine Zugschraube, welche in ein Innengewinde des Implantatkörpers eingeschraubt ist, ist nicht vorhanden.

Des Weiteren ist aus der EP 0 707 835 B1 ist ein Dentalimplantat bekannt, welches zweiphasig ausgebildet ist und einen im Kieferknochen verankerbaren Implantatkörper sowie ein mit diesem mittels einer Zugschraube verbindbares Aufbauteil aufweist. Der Implantatkörper enthält eine zentrale Aufnahmeöffnung, welche eine sich zum koronalen Ende öffnende konische Innenfläche und ferner im inneren Endbereich ein Innengewinde zur Verankerung der Zugschraube aufweist. Das Aufbauteil enthält eine Durchgangsbohrung, durch welche die Zugschraube durchgreift, wobei in einem zur Mundhöhle weisenden Kopfbereich des Aufbauteils die Durchgangsbohrung eine Erweiterung zur Aufnahme eines Kopfes der genannten Zugschraube aufweist. Ferner enthält das Aufbauteil einen zumindest teilweise in die Aufnahmeöffnung eingreifenden Zapfen mit einer konischen Außenfläche, welche an die konische Innenfläche der Aufnahmeöffnung angepasst ist. Die genannten konischen Flächen sind in vorteilhafter Weise derart ausgebildet, dass zwischen dem Implantatkörper und dem mittels der Zugschraube verbundenen Aufbauteil eine selbsthemmende Konusverbindung vorhanden ist. Diese form- und kraftschlüssige Konusverbindung gewährleistet eine den hohen Belastungen dauerhaft standhaltende Rotationssicherung des Aufbauteils bezüglich des Implantatkörpers, wobei mittels der Zugschraube eine funktionssichere Vorspannung vorgegeben und / oder gewährleistet wird. Weiterhin wird durch die spalt- und spielfrei ausgeführte Konusverbindung das Eindringen von Bakterien oder sonstigen Krankheitserregern in das Innere des Dentalimplantats zuverlässig unterbunden. Zum Einsetzen des Implantatkörpers in eine entsprechend vorbereitete Öffnung oder Bohrung des Kieferknochens enthält der Implantatkörper im koronalen Bereich bzw. der koronalen Endfläche Einsetzelemente für ein Einsetzwerkzeug, wie beispielsweise sich nach okklusal öffnende Schlitze für einen Schraubendreher. Bei diesem zweiphasigen Dentalimplantat ist das Aufbauteil zum Implantatkörper bezüglich der Längsachse stufenlos positionierbar, so dass insbesondere bei der für die Anfertigung einer Suprakonstruktion erforderlichen Abdrucknahme und / oder im Dentallabor besondere Maßnahmen erforderlich werden, um eine winkelgetreue Übertragung bzw. Ausrichtung des Aufbauteils bezüglich des Implantatkörpers zu erhalten.

Ferner ist aus der DE 94 17 182 U1 ein für einen Zahnersatz bestimmter Implantatbausatz bekannt, dessen Implantatkörper im Anschluss an die konische Innenfläche ein als Mehrkantaufnahme ausgebildetes Indexierungselement aufweist. Analog enthält das Aufbauteil in axialer Richtung anschließend an die konische Außenfläche als Indexierungselement gleichfalls einen Mehrkant. Die konische Innenfläche befindet sich innerhalb eines Kopfteils des Implantatkörpers, wobei das genannte Kopfteil eine sich zur koronalen Endfläche des Implantatkörpers konisch erweiternde Außenfläche aufweist. Die Indexierungselemente befinden sich in einem Bereich, in welchem der Implantatkörper außen kein Gewinde aufweist. Erst axial zu den Indexierungselementen beabstandet weist der Implantatkörper zur Verankerung im Kieferknochen ein Außengewinde auf, welches sich etwa von der Mitte der Längserstreckung des Implantatkörpers bis zu dessen apikalem Ende erstreckt. Da die Indexierungselemente axial anschließend an die konische Innenfläche des Implantatkörpers vorgesehen sind, erstreckt sich die konische Innenfläche des Implantatkörpers nur über einen kleinen Teil dessen Gesamtlänge, so dass für die Konusverbindung mit dem Aufbauteil nur eine recht kleine bzw. axial kurze Verbindungsfläche zur Verfügung steht.

Weiterhin ist aus der DE 299 20 283 U1 ein Implantatbausatz bekannt, dessen Aufbauteil oder gegebenenfalls ein separates Distanzelement über eine Konusverbindung und eine zentralen Fixationsschraube bzw. Zugschraube im Implantatkörper rotationsstabil fixierbar ist. Das Aufbauteil ist mit einer Vielzahl von Matrizen versehen, in welche eine Patrize des Implantatkörpers als Indexierungselement drehstabilisierend eingreift, um die Aufbaureposition zu sichern. Der Patrizenbolzen befindet sich in einem axialen Bereich des Implantatkörpers, in welchem dieser kein Außengewinde aufweist. Zudem besitzt der genannte Bereich nur eine geringe axiale Länge im Vergleich zur Gesamtlänge des Implantatkörpers, und zwar im wesentlichen in dem recht kurzen Kopfbereich des Implantatkörpers. Der genannte Patrizenbolzen ist ein zusätzliches Bauteil, welches radial von außen durch den Implantatkörper in den Bereich der Konusverbindung hineinragt, wobei ein nicht unerheblicher Aufwand für eine paßgenaue Anordnung und Ausrichtung erforderlich ist.

Schließlich ist aus der DE 101 29 684 A1 ein als Zahn- oder Kiefersegment bezeichnetes Aufbauteil auf einem Basisträger bzw. Implantatkörper bekannt. Zur Verbindung des Aufbauteils mit dem Implantatkörper ist ein als Doppelkonus ausgebildetes zusätzliches Verbindungselement vorgesehen, welches einerseits in eine konische Ausnehmung des Aufbauteils und andererseits in eine konische Ausnehmung des Implantatkörpers eingesetzt ist. Das doppelkonische Verbindungselement weist ein mit dem Implantatkörper korrespondierendes Formschlußelement auf, wobei aber die Drehwinkelposition des Aufbauteils bezüglich des doppelkonisch ausgebildeten Verbindungsteils frei vorgebbar ist. Eine winkelgetreue Ausrichtung des Aufbauteils zum Implantatkörper ist nicht möglich.

Der Erfindung liegt daher die Aufgabe zugrunde, das Dentalimplantat der genannten Art mit einem geringen konstruktiven Aufwand und/oder Bauvolumen dahingehend weiter zu bilden, dass bezüglich der Längsachse eine definierte Ausrichtung, nachfolgend Indexierung genannt, des Aufbauteils gegenüber dem Implantatkörper vorgegeben werden kann. Hierbei sollen die bei der genannten Konusverbindung vorhandenen Wirkungszusammenhänge und Vorteile gleichwohl beibehalten werden. Das Dentalimplantat soll in den verschiedenen Funktionsbereichen, wie insbesondere Konusverbindung, Indexierung, Gewindeverbindung, den jeweiligen Anforderungen entsprechend dimensioniert und ausgebildet werden können. Auch sollen nachteilige Beeinflussungen der verschiedenen Funktionsbereiche zueinander und insbesondere bezüglich eines Außengewindes vermieden werden und die Anforderungen hinsichtlich Belastbarkeit und/oder Lebensdauer in besonderem Maße dauerhaft erfüllen. Des Weiteren soll mit geringem Aufwand ein Implantatsystem geschaffen werden, welches wahlweise einerseits eine stufenlose Einstellung der Rotationsposition oder andererseits eine definierte Vorgabe der Rotationsposition des Aufbauteils bezüglich des Implantatkörpers ermöglicht.

Die Lösung dieser Aufgabe erfolgt gemäß der im Patentanspruch 1 angegebenen Merkmale.

Das vorgeschlagene Dentalimplantat zeichnet sich durch eine funktionsgerechte Konstruktion aus, wobei aufgrund der miteinander korrespondierenden und/oder ineinander greifenden ersten und zweiten Indexierungselemente des Implantatkörpers einerseits und des Aufbauteils andererseits dessen Rotationsposition bezüglich des Implantatkörpers definiert vorgebbar ist. Das oder die Indexierungselemente des Aufbauteils sind erfindungsgemäß in dessen apikalen Bereich, insbesondere der konischen Außenfläche, angeordnet. Nach okklusal zum koronalen Ende des Implantatkörpers anschließend ist eine sich bevorzugt im Wesentlichen zur koronalen Endfläche erstreckende Ringzone vorhanden, in welcher die konische Außenfläche des Aufbauteils an der zugeordneten konischen Innenfläche des Implantatkörpers spalt- und spielfrei anliegt. Die genannte Ringzone befindet sich vorteilhaft zumindest teilweise in dem Bereich des Implantatkörpers, in welchem dieser außen bevorzugt kein Außengewinde aufweist. Alternativ kann der Implantatkörper im koronalen Bereich aber auch keinen gewindefreien Bereich aufweisen, wobei im koronalen Bereich das Außengewinde vorteilhaft eine reduzierte Gewindetiefe besitzt. Bei derartigen Ausführungsformen befindet sich die genannte Ringzone somit radial innerhalb des Außengewindes, insbesondere dessen Gewindebereichs mit reduzierter Gewindetiefe. Die Indexierungselemente reichen vorteilhaft axial zumindest teilweise in den Bereich der konischen Flächen des Zapfens und/oder des Implantatkörpers, wobei in Umfangsrichtung zwischen den Indexierungselementen konische Flächenteile liegen. Die Indexierungselemente befinden sich axial im Wesentlichen in dem Bereich des Implantatkörpers, in welchem dieser ein Außengewinde mit einer geringeren Tiefe aufweist als im Bereich seines apikalen Endes. Aufgrund der erfindungsgemäß vorgesehenen Zuordnung der Indexierungselemente bzw. Teile derselben zu dem Gewindebereich des Außengewindes, in welchem dieses eine vergleichweise geringe Gewindetiefe aufweist, ist selbst bei geringem Außendurchmesser des Implantatkörpers eine den Festigkeitsanforderungen entsprechende Wanddicke des Implantatkörpers vorgegeben.

Der erfindungsgemäße Implantatkörper weist in bevorzugter Weise in Richtung zum koronalen Ende anschließend an das Außengewinde und insbesondere dessen Bereich mit reduzierter Gewindetiefe einen gewindefreien Bereich auf. Dieser gewindefreie Bereich und/oder das koronale Ende des Implantatkörpers befinden sich nach dessen Implantation in einem Kieferknochen, zumindest näherungsweise und/oder im wesentlichen im Bereich der Oberkante des Kieferknochens. In bevorzugter Weise befindet sich bezüglich des genannten gewindefreien Bereiches radial innen liegend eine Ringzone, in welcher die über den Umfang geschlossen ausgebildeten konischen Flächenbereiche des Implantatkörpers und des Aufnahmeteils unter Vorspannung aneinander liegen. In der alternativen Ausführungsform des Implantatkörpers ohne den gewindefreien Bereich reicht die genannte Ringzone gleichfalls zumindest näherungsweise bis zum koronalen Ende des Implantatkörpers. Des Weiteren ist der Implantatkörper zumindest im koronalen Endbereich bevorzugt mit einer im Wesentlichen zylindrischen Außenkontur ausgebildet, wobei dieser Bereich entweder gewindefrei oder bevorzugt mit dem Außengewinde mit reduzierter Gewindetiefe ausgebildet ist. Der erfindungsgemäße Implantatkörper weist bevorzugt keinen sich zum koronalen Ende konisch erweiterten Kopfbereich auf, welcher nach der Implantation sich innerhalb und/oder zumindest teilweise außerhalb der Oberkante des Kieferknochens befinden würde.

Die bevorzugt im koronalen Endbereich, insbesondere der koronalen Endfläche des Implantatkörpers angeordneten Einsetz- und/oder Eindrehelemente sind entsprechend der axialen Länge der genannten Ringzone beabstandet zu den erfindungsgemäß vorgesehenen Indexierungselementen angeordnet. Es ist von besonderer Bedeutung, dass die Einsetzelemente einerseits und die Indexierungselemente andererseits voneinander unabhängig ausgebildet und angeordnet sind und somit den Anforderungen entsprechend dimensioniert werden können. Aufgrund der erfindungsgemäßen Funktionstrennung der Einsetzelemente sowie der Indexierungselemente haben etwaige Formveränderungen oder Beschädigungen der Einsetzelemente beim Einsetzen bzw. Eindrehen des Implantatkörpers in den Kieferknochen keine nachteiligen Auswirkungen auf die Indexierung bzw. Vorgabe der Rotationsposition des Aufbauteils bezüglich des Implantatkörpers. Das erfindungsgemäße Dentalimplantat weist vorteilhaft drei voneinander unabhängige und/oder getrennte Funktionsbereiche auf, nämlich die Einsetzelemente am koronalen Endbereich des Implantatkörpers, die Ringzone mit den über den gesamten Umfang geschlossenen dicht- und spaltfrei aneinander liegenden konischen Flächen des Aufbauteils und des Implantatkörpers sowie den apikalen Bereich mit den bevorzugt formschlüssig ineinander greifenden Indexierungselementen des Aufbauteils und des Implantatkörpers.

Im Rahmen der Erfindung können in einer alternativen Ausgestaltung die Einsetz-und/oder Eindrehelemente innerhalb des Implantatkörpers und/oder innerhalb der zentralen Aufnahmeöffnung angeordnet sein. Hierbei können die Einsetz- und/oder Eindrehelemente an oder nahe an dem koronalen Ende innenliegend ebenso angeordnet sein wie im Inneren der Aufnahmeöffnung, wie beispielsweise zwischen den Indexierungselementen und dem Innengewinde für die Zugschraube. Auch können im Rahmen der Erfindung die Einsetz- und/oder Eindrehelemente mit den Indexierungselementen des Implantatkörpers kombiniert sein bzw. als solche ausgebildet sein. Weiterhin können erfindungsgemäß die Einsetz- und/oder Eindrehelemente in die Konusfläche des lmplantatkörpers integriert sein und/oder Letztere bevorzugt in Kombination mit einem Adapter genutzt werden. Ein derartiger Adapter besitzt eine mit der Konusfläche des Implantatkörpers korrespondierende äußere Konusfläche und ist in geeigneter Weise mit dem Implantatkörper zur Implantierung desselben derart verbunden, dass mittels des Adapters über die genannten Konusflächen die Kräfte bzw. Drehmomente zum Einsetzen und/oder Eindrehen des Implantatkörpers in den Kieferknochen zumindest teilweise übertragen werden können. Schließlich können in einer besonderen Ausgestaltung der Erfindung die Einsetz- und/oder Eindrehelemente durch die Kombination des oder der Indexierungselemente des Implantatkörpers mit dessen konischer Innenfläche ausgebildet sein, insbesondere in Kombination mit einem Adapter, welcher eine korrespondierend konische Außenfläche sowie zumindest ein korrespondierendes Indexierungselement aufweist. Die genannten Adapter sind mit dem Implantatkörper derart lösbar verbunden, dass jene nach der Implantation vom Implantatkörper entfernbar sind.

Erfindungsgemäß sind wenigstens ein erstes Indexierungselement und ferner wenigstens zwei zweite Indexierungselemente vorhanden. So weist in einer besonderen Ausführungsform der Implantatkörper das wenigstens eine erste Indexierungselement auf, welches als eine radial nach innen zur Längsachse gerichtete Rippe ausgebildet ist, während das Aufbauteil eine vorgegebene Anzahl der zweiten Indexierungselemente aufweist, welche als Nuten im apikalen Bereich und/oder der konischen Außenfläche des Aufbauteils ausgebildet sind. Entsprechend der Anzahl der zweiten Indexierungselemente des Aufbauteils kann dieses eine entsprechende Anzahl von Rotationspositionen bzw. Drehwinkelpositionen um die Längsachse bezüglich des Implantatkörpers einnehmen. Bevorzugt sind zwei erste Indexierungselemente diametral angeordnet.

Im Rahmen der Erfindung kann in einer alternativen Ausführungsform der Implantatkörper eine vorgegebene Anzahl von zweiten als Nuten ausgebildeten Indexierungselementen aufweisen, während das Aufbauteil wenigstens ein radial nach außen gerichtetes und als Rippe ausgebildetes erstes Indexierungselement aufweist. Es versteht sich, dass für eine Anzahl der ersten Indexierungselemente größer 1 die Winkelteilung der ersten Indexierungselemente um die Längsachse und die Winkelteilung der zweiten Indexierungselemente derart aufeinander abgestimmt sind, dass das Aufbauteil in vorgegebenen unterschiedlichen Drehwinkelpositionen bezüglich des Implantatkörpers positionierbar ist.

In einer besonderen Ausgestaltung sind das oder die Indexierungselemente Bestandteil eines zusätzlichen Körpers, insbesondere einer Hülse, welche insbesondere im apikalen Bereich der als Sackbohrung ausgebildeten Aufnahmeöffnung des Implantatkörpers drehgesichert festgelegt und bevorzugt eingepreßt ist. Ferner kann im Rahmen der Erfindung am apikalen Ende des Aufbauteils ein separat gefertigter Körper drehfest verbunden sein, welcher wenigstens ein, bevorzugt als Rippe ausgebildetes und in den Bereich der konischen Außenfläche des Aufbauteils ragendes Indexierungselement aufweist. Ein derartiger separat vom Dentalimplantat, sei es vom Implantatkörper und/oder dem Aufnahmeteil, gefertigter Körper gewährleistet eine präzise Fertigung und/oder Ausbildung der Indexierungselemente. Alternativ können im Rahmen der Erfindung die Indexierungselemente integrale Bestandteile des Implantatkörpers und/oder des Aufbauteils sein.

Weiterhin betrifft die Erfindung ein Implantatsystem mit Dentalimplantaten der vorstehend und nachfolgend an Hand der Ausführungsbeispiele und ferner in den Patentansprüchen angegebenen Art. Hierbei weisen die Implantatkörper für die unterschiedlichen Indikationen insbesondere unterschiedliche Außendurchmesser und Längen auf. Des Weiteren können die Aufbauteile vor allem unterschiedlich ausgebildete Kopfbereiche aufweisen und/oder Letztere können zur Längsachse des Zapfens in unterschiedlichen Winkeln angeordnet sein. Die zentralen Aufnahmeöffnungen der Implantatkörper einerseits und die Zapfen der Aufbauteile sind jedoch in der erfindungsgemäß vorgeschlagenen Weise ausgebildet und/oder aufeinander abgestimmt.

Als eine besondere Ausgestaltung der Erfindung wird ein Implantatsystem vorgeschlagen, welches für unterschiedlich konfigurierte Implantatkörper übereinstimmend ausgebildete Aufbauteile mit den zweiten Indexierungselementen umfaßt. Das Implantatsystem enthält wenigstens einen Implantatkörper mit den vorstehend erläuterten ersten Indexierungselementen und ferner wenigstens einen Implantatkörper ohne derartige Indexierungselemente. Diese beiden Arten der Implantatkörper des Implantatsystems können in bekannter Weise unterschiedliche Längen und/oder Durchmesser je nach Indikation aufweisen. Hingegen sind die Aufbauteile, welche ihrerseits gleichfalls unterschiedlich ausgebildet sein können, beispielsweise mit zum Zapfen koaxialen oder unter verschiedenen Winkeln abgewinkeltem Kopfbereich, für die beiden Arten der Implantatkörper vorgesehen. Somit kann problemlos je nach medizinischer Indikation für die übereinstimmend ausgebildeten Aufbauteile die Rotationsposition indexiert oder aber stufenlos vorgegeben werden. Für die Indexierung ebenso wie für die stufenlose Einstellung der Rotationsposition gelangen in dem erfindungsgemäßen Implantatsystem die gleichen Aufbauteile zum Einsatz, wodurch der Aufwand für Fertigung, Lagerhaltung und Bereitstellung erheblich reduziert wird. Werden darüber hinaus für die Indexierungselemente, insbesondere im Implantatkörper separate Körper und/oder die oben erläuterten Hülsen vorgesehen, so wird auch eine erhebliche Reduzierung des Aufwandes hinsichtlich der Implantatkörper erreicht, da abgesehen von dem separaten Körper die Implantatkörper zunächst übereinstimmend gefertigt und nachfolgend je nach Einsatzzweck mit dem die Indexierungselemente aufweisenden separaten Körper ausgerüstet werden.

Weiterhin wird als eine alternative besondere Ausgestaltung der Erfindung ein Implantatsystem vorgeschlagen, welches für unterschiedlich konfigurierte Aufbauteile übereinstimmend ausgebildete Implantatkörper enthält. Dieses Implantatsystem enthält somit wenigstens ein Aufbauteil mit den vorstehend erläuterten ersten Indexierungselementen und wenigstens ein Aufbauteil ohne derartige Indexierungselemente. Es sind somit zwei Arten von Aufbauteilen vorhanden, welche in bekannter Weise unterschiedliche Abmessungen, Ausbildungen je nach Indikation aufweisen, wobei die vorstehenden Erläuterungen zu dem Implantat mit unterschiedlich konfigurierten Implantatkörpern analog gelten.

Weiterbildungen und besondere Ausgestaltungen der Erfindung sind in den Unteransprüchen und der nachfolgenden Beschreibung angegeben.

Anhand der Zeichnungen werden besondere Ausführungsbeispiele des erfindungsgemäßen Dentalimplantats näher erläutert, ohne dass insoweit eine Beschränkung erfolgt. Es zeigen:
- Fig. 1: einen axialen Längsschnitt des Dentalimplantats,
- Fig. 2, 3: das Aufbauteil in einer perspektivischen Darstellung und teilweise geschnitten,
- Fig. 4, 5: den als Hülse ausgebildeten separat gefertigten Körper mit zwei Indexierungselementen,
- Fig. 6 - 9: Schnitte und eine perspektivische Darstellung eines weiteren Ausführungsbeispiels des Dentalimplantats mit als Zahnkränzen ausgebildeten Indexier ungselementen,
- Fig. 10: einen Schnitt ähnlich Fig. 8, jedoch mit geänderter Verzahnungsgeometrie,
- Fig. 11 - 14: Schnitte und eine perspektivische Darstellung einer weiteren Ausführungsform des Dentalimplantats mit als abgerundete Verzahnungen ausgebildeten Indexierungselementen,
- Fig. 15 - 18: Schnitte und eine perspektivische Darstellung eines anderen Ausführungsbeispiels des Dentalimplantats mit als Sechskant ausgebildeten Indexierungselementen.

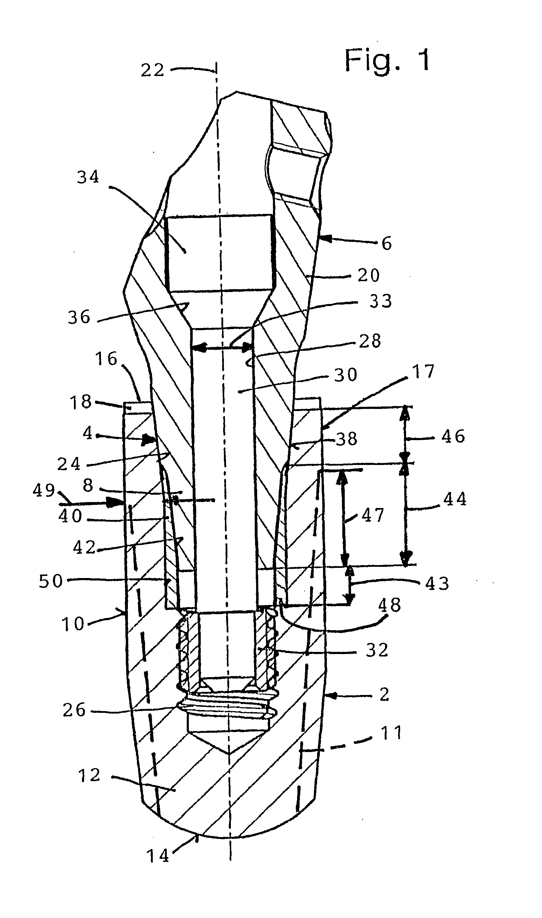

Das zweiphasige Dentalimplantat enthält gemäß Fig. 1 einen Implantatkörper 2 mit einer zentralen Aufnahmeöffnung 4 und einem Aufbauteil 6, dessen Zapfen 8 in die Aufnahmeöffnung 4 eingreift. Der Implantatkörper 2 ist an seiner im wesentlichen zylindrischen Außenfläche 10 mit einem mittels gestrichelter Linien angedeuteten Außengewinde 11 versehen und weist am apikalen Ende 12 eine sphärisch gerundete Endfläche 14 auf. Ausgehend von dem im Kieferknochen zu versenkenden apikalen Ende 12 ändert sich die Form der Gewindeflanken nach okklusal bzw. zum koronalen Ende 16 bevorzugt kontinuierlich. Das Außengewinde 11 weist in einer besonderen Ausgestaltung einen zum apikalen Ende 12 sich konisch verjüngenden Gewindekern auf. Alternativ kann das Außengewinde 11 und/oder dessen Kern gestuft ausgebildet sein. Ferner ist die zum koronalen Ende 16 hin nach okklusal weisende Gewindeflanke des genannten Gewindes vorteilhaft als Planfläche und die nach apikal weisende, sich in der Form ändernde, Gewindeflanke kurvenförmig konkav ausgebildet. Vorteilhaft weist der Implantatkörper 2 anschließend an das Außengewinde 11 in Richtung zum koronalen Ende 16 einen gewindefreien Bereich 17 auf. Am koronalen Ende 16 bzw. in der dort vorhandenen koronalen Endfläche enthält der Implantatkörper 2 als Quernuten ausgebildete Einsetzund/oder Eindrehelemente 18, welche mit Hilfe eines entsprechenden Einsetzwerkzeugs das Einsetzen und Eindrehen des Implantatkörpers in den Kieferknochen ermöglichen. Es sei hier ausdrücklich festgehalten, dass im Rahmen der Erfindung die Außengeometrie und/oder Innengeometrie des Implantatkörpers, sei es dessen Außengewinde bzw. des gewindefreien Bereiches oder der Einsetz- und/oder Eindrehelemente, entsprechend den obigen Erläuterungen ausgebildet sein können. Das Aufbauteil 6 enthält einen aus dem Implantatkörper 2 herausragenden Kopfbereich 20, welcher bezüglich der Längsachse 22 unter einem vorgegebenen Winkel abgewinkelt ist und zur Befestigung einer Suprakonstruktion oder Zahnersatzes dient.

Die als Sackbohrung ausgebildete zentrale Aufnahmeöffnung 4 enthält eine im wesentlichen vom koronalen Ende 16 ausgehende und zu diesem sich öffnende konische Innenfläche 24 und ferner zum apikalen Ende 12 hin ein Innengewinde 26. Das eine zur Längsachse 22 koaxiale Durchgangsbohrung 26 aufweisende Aufbauteil 6 wird von einer Zugschraube 30 durchdrungen, an deren innerem Ende eine Gewindehülse 32 drehfest, beispielsweise durch Laserschweißung, angeordnet ist. Die Gewindehülse 32 besitzt einen Außendurchmesser, welcher um einen vorgegebenen Betrag größer ist als der Innendurchmesser 33 der Durchgangsbohrung 28 und/oder als der Außendurchmesser des durch die Durchgangsbohrung 28 durchgreifenden Teiles der Zugschraube 30. Die Gewindehülse 32 greift mit einem Außengewinde in das genannte Innengewinde 26 des Implantatkörpers 2 ein. Wie ersichtlich, liegen die Zahnspitzen der Gewindehülse 32 auf einem Durchmesser, welcher erheblich größer ist als der Innendurchmesser 33 der Durchgangsbohrung 28. Mit anderen Worten, der Innendurchmesser 33 der Durchgangsbohrung 28 kann vergleichsweise klein ausgebildet werden, so dass für die nachfolgend zu erläuternden Indexierungselemente eine den Material- und Festigkeitsanforderungen entsprechende Wanddicke des Zapfens 8 zur Verfügung steht.

Im Kopfbereich 20 enthält die Durchgangsbohrung eine Erweiterung zur Aufnahme des Schraubenkopfes 34, welcher zweckmäßig an einer sich konisch verjüngenden Anlagefläche 36 derart anliegt, dass beim Festziehen der Zugschraube 30 mit einem vorgebbaren Drehmoment eine definierte Vorspannung des Aufbauteils 6 bezüglich des Implantatkörpers 2 erreicht wird. Hierbei liegt der in die Aufnahmeöffnung 4 eingreifende Zapfen 8 mit seiner konischen Außenfläche 38 an der konischen Innenfläche 24 der zentralen Aufnahmeöffnung 4 mit vorgegebener Vorspannung an. Die Öffnungswinkel der konischen Innenfläche 24 sowie der konischen Außenfläche 38 sind derart vorgegeben und/oder ausgebildet, dass eine selbsthemmende Konusverbindung vorliegt. Die Konusverbindung ist spalt- und spielfrei ausgebildet und gewährleistet eine dauerhafte Rotationssicherung des Aufbauteils 6 im Implantatkörper 2.

In der zentralen Aufnahmeöffnung 4 sind erste Indexierungselemente 40 angeordnet, welche als nach innen zur Längsachse 22 gerichtete Rippen ausgebildet sind. Das Aufbauteil 6 enthält zweite Indexierungselemente 42, welche als in der konischen Außenfläche 10 angeordnete Nuten ausgebildet sind. Wie ersichtlich, greifen die ersten Indexierungselemente 40 in die zweiten Indexierungselemte 42 formschlüssig ein. Mittels der Indexierungselemente 40, 42 wird die Rotationsposition des Aufbauteiis 6 bezüglich des Implantatkörpers 2 definiert vorgegeben. In Umfangsrichtung zwischen den Indexierungselementen 40, 42 liegen Flächenteile der konischen Flächen 24, 38 des Implantatkörpers 2 und des Zapfens 8 in zweckmäßiger Weise unter Vorspannung aneinander. Es ist von besonderer Bedeutung, dass die ersten und zweiten Indexierungselemente 42 nicht zur Rotationssicherung, sondern vorteilhaft ausschließlich zur Vorgabe der Rotationsposition dienen und die Rotationssicherung mittels der genannten Konusverbindung erfolgt. Die Indexierungselemente 40, 42 befinden sich im Inneren der zentralen Aufnahmeöffnung 4 in einem vorgegebenen Abstand zur koronalen Endfläche 16. Es ist von besonderer Bedeutung, dass die Indexierungselemente 40, 42 in einem vorgegebenen axialen Abstand 43 zum Innengewinde 26 des Implantatkörpers und/oder dem mit Letzterem korrespondierenden Außengewinde der Zugschraube und insbesondere deren Gewindehülse 32 angeordnet sind. Hierdurch ist sicher gestellt, dass das apikale Ende des Zapfens 8 bei Herstellung der Verbindung des Aufbauteils 6 mit dem Implantatkörper 2 mittels der Zugschraube 30 die erforderliche Drehwinkelposition des Aufbauteils 6 bezüglich des Implantatkörpers 2 ohne Beeinträchtigung zuverlässig hergestellt wird. Ferner sei besonders darauf hingewiesen, dass die zweiten Indexierungselemente 42 im apikalen Bereich 44 des Aufbauteils 6 angeordnet sind und dass zwischen dem apikalen

Bereich 44 und dem koronalen Ende 16 eine über den Umfang geschlossene Ringzone 46 die konische Außenfläche 38 spiel- und spaltfrei an der konischen Innenfläche 24 unter Vorspannung anliegt. Auch im Bereich der Einsetzelemente 18, in welchem der Zapfen 8 in die Aufnahmeöffnung 4 eintritt, liegt abgesehen von den als radialen Nuten ausgebildeten Einsetzelementen 18, die konische Außenfläche 38 bzw. deren Flächenteile an der konischen Innenfläche 24 unter Vorspannung an. Wie ersichtlich, weist der Implantatkörper 2 im koronalen Endbereich und/oder außen, insbesondere zugeordnet der inneren Ringzone 46, eine im Wesentlichen zylindrische Außenkontur auf, wobei dort bevorzugt der gewindefreie Bereich 17 vorhanden ist. Gemäß obigen Ausführungen kann das Außengewinde alternativ aber auch zumindest näherungsweise bis zum koronalen Ende 16, bevorzugt mit verringerter Gewindetiefe, vorgesehen sein. Bevorzugt besitzt der erfindungsgemäße Implantatkörper 2 keinen sich zum koronalen Ende 16 konisch erweiternden Kopfbereich.

Es ist von besonderer Bedeutung, dass der apikale Bereich 44 mit den Indexierungselementen 40, 42 zumindest teilsweise und/oder näherungsweise demjenigen Teil 47 des Außengewindes 11 zugeordnet ist, in welchem letzteres eine reduzierte Gewindetiefe aufweist. In diesem axialen Bereich 47 des Außengewindes besitzt der Implantatkörper 2 gleichwohl eine im Hinblick auf Festigkeits- und Stabilitätsanforderungen hinreichend große Wanddicke 49. Dies ist vor allem bei Implantatkörpern mit vergleichsweise geringen Außendurchmessern von besonderer Bedeutung. Es sei darauf verwiesen, dass im Bereich 47 eine im Vergleich zur Gewindetiefe im nach apikal anschließenden Bereich des Außengewindes 11 erheblich geringere Gewindetiefe vorgegeben ist. Alternativ zu dem dargestellten kontinuierlichen Übergang aufgrund der konischen Ausbildung des Gewindekerns des Außengewindes 11 kann im Rahmen der Erfindung des Weiteren ein diskontinuierlicher und/oder gestufter Übergang vom Bereich 47 zu dem nach apikal anschließenden weiteren Gewindebereich des Außengewindes 11 mit großer Gewindetiefe vorgesehen sein.

Das wenigstens eine erste Indexierungselement 40 ist Bestandteil einer Hülse 48, welche in einem mittleren Bereich 50 der Aufnahmeöffnung 4 drehgesichert und insbesondere unlösbar und/oder mittels fester Verbindung, wie Schweißung oder Klebung, festgelegt ist. Der mittlere Bereich 50 liegt axial zwischen der konischen Innenfläche 24 und dem Innengewinde 26 der Aufnahmeöffnung 4. Das oder die ersten Indexierungselemente 40 ragen nach okklusal in den Bereich der konischen Innenfläche 24.

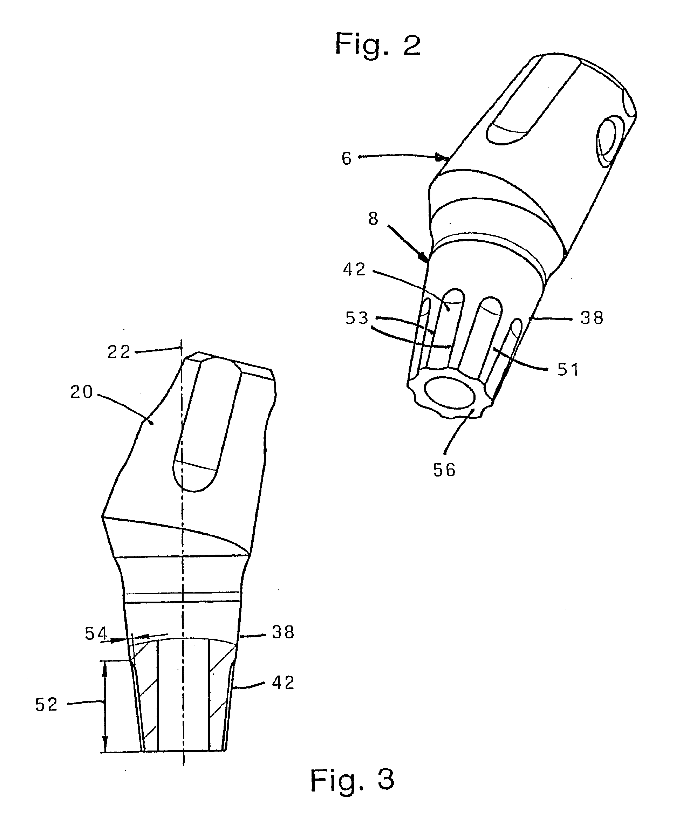

Fig. 2 und 3 zeigen das Aufbauteil 6, dessen Zapfen 8 im Bereich der konischen Außenfläche 38 über den Umfang gleichmäßig verteilt eine Anzahl der als konkave Nuten ausgebildeten Indexierungselemente 42 enthält. In Umfangsrichtung zwischen den Indexierungselementen und/oder Nuten 42 besitzt das Aufbauteil 6 konische Flächenteile 51 der konischen Außenfläche 38. Die Indexierungselemente 42 liegen erfindungsgemäß radial nach innen und/oder innerhalb der Hüllkurve, welche durch die konische Außenfläche 38 vorgegeben ist. Die zweiten Indexierungselemente 42 bzw. Nuten weisen im Bereich der konischen Außenfläche 38 zueinander in vorteilhafter Weise im wesentlichen parallele Längskanten 53 auf. Die Indexierungselemente 42 erstrecken sich in axialer Richtung zumindest teilweise in die konische Außenfläche 38 des Zapfens 8. Andererseits reicht die konische Außenfläche 38 mit den konischen Flächenteilen 51 bis zum apikalen Ende 56 des Aufbauteils. Aufgrund des erfindungsgemäß in axialer Richtung zumindest teilweise ineinander Greifens der Indexierungselemente 42 und der konischen Außenfläche 38 ist in bevorzugter Weise eine Integration dahingehend geschaffen, dass über eine erhebliche axiale Gesamtlänge des Zapfens 8 die Überlappung der konischen Außenfläche 38 und/oder deren Flächenteile 51 mit der korrespondierend ausgebildeten konischen Innenfläche des Implantatkörpers 2 vorhanden ist, ohne dass der Zapfen 8 eine erheblich vergrößerte Gesamtlänge aufweisen müßte, welche im Falle einer Addition der axialen Konuslänge und der axialen Länge der im Anschluss angeordneten Indexierungselemente erforderlich wäre. Durch die erfindungsgemäße zumindest teilweise axiale und/oder radiale Integration der Indexierungselemente 42 in die konische Außenfläche 38 wird in bevorzugter Weise eine funktionssichere konische Kopplung unter Beibehaltung und/oder Erreichen einer relativ kurzen Gesamtlänge des Zapfens 8 sichergestellt.

Die Nuten 42 sind unter einem vorgegebenen Winkel zur Längsachse 22 geneigt angeordnet, wobei dieser Winkel im Wesentlichen dem halben Öffnungswinkel der konischen Außenfläche 38 entspricht. Wie ersichtlich, erstrecken sich die zweiten Indexierungselemente bzw. Nuten 42 nur über einen Teil der Gesamtlänge der konischen Außenfläche 38, wobei die axiale Erstreckung 52 beispielsweise in der Größenordnung von 2 mm liegt. Die Nuten 42 besitzen eine Tiefe 54, bevorzugt in der Größenordnung und/oder im Bereich von 0,1 bis 0,6 mm, insbesondere in der Größenordnung und/oder im Bereich von 0,2 bis 0,4 mm. Die Nuten 42 sind am apikalen Ende 56 des Aufbauteils 6 offen ausgebildet, so dass das oder die zugeordneten Indexierungselemente des Implantatkörpers 2 beim Einsetzen des Aufbauteils 6 in diesen problemlos in die Nuten 42 eingeführt werden können.

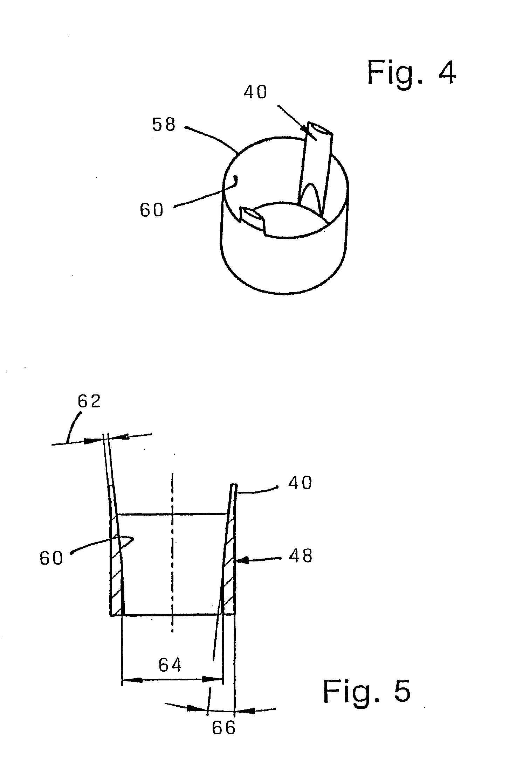

In Fig. 4 und 5 ist der als Hülse 48 ausgebildete separate Körper des Implantatkörpers dargestellt. Die Hülse 48 enthält zwei diametral angeordnete und als Rippen ausgebildete Indexierungselemente 40. Die radial nach innen gerichteten Rippen 40 besitzen eine konvexe Oberfläche entsprechend den vorstehend erläuterten Nuten des Aufbauteils. Wie ersichtlich, ragen die Rippen 40 in einer vorgegebenen Länge über den nach okklusal gerichteten oberen Rand 58 der Hülse 48 hinaus. Zumindest ein Teil der vom Rand 58 nach apikal gerichtete Teil der Innenfläche 60 des Implantats bzw. der konischen Außenfläche des Aufbauteils gleichfalls konisch ausgebildet. Die Rippen 42 besitzen am freien Ende eine Dicke 62, welche bevorzugt in der Größenordnung und/oder im Bereich von 0,1 bis 0,6 mm, insbesondere in der Größenordnung und/oder im Bereich von 0,2 bis 0,4 mm liegt. In dieser besonderen Ausführungsform liegt der Innendurchmesser 64 der Hülse 48 bevorzugt im Bereich und/oder der Größenordnung von 1,5 bis 2,3 mm, vorzugsweise 1,6 bis 1,9 mm, insbesondere näherungsweise 1,75 mm, während der Neigungswinkel 66 der Innenfläche 60 zumindest näherungsweise 5,7° beträgt.

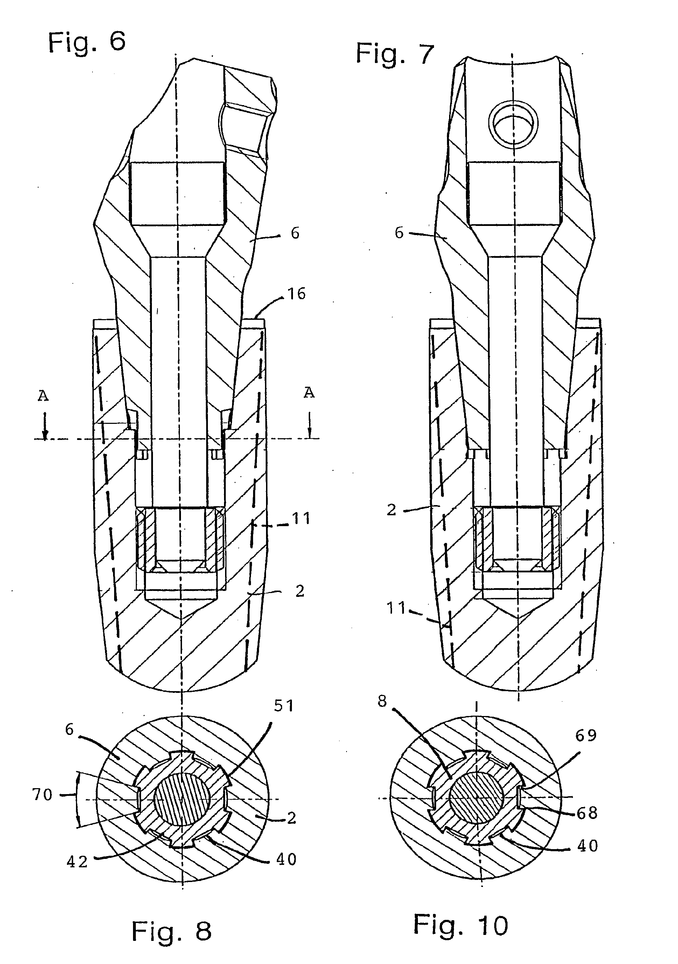

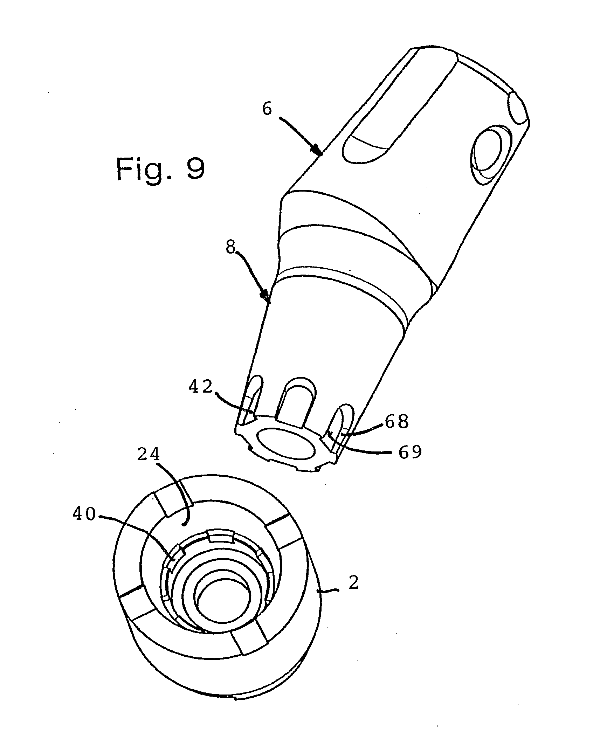

Das Ausführungsbeispiel des Dentalimplantats gemäß Fig. 6 bis 9 entspricht grundsätzlich dem oben erläuterten Dentalimplantat mit dem Implantatkörper 2 und dem Aufbauteil 6 mit dem Zapfen 8, wobei Fig. 8 einen Schnitt quer zur Längsachse gemäß Schnittlinie. A von Fig. 6 zeigt. Die Indexierungselemente 40, 42 sind als ineinander greifende Zahnkränze des Implantatkörpers bzw. des Zapfens 8 ausgebildet. Wie ersichtlich, enthält das Indexierungselement 40 des Implantatkörpers 2 als Rippen bzw. radial nach innen gerichtete Zähne 40 und korrespondierend hierzu enthält der Zapfen 8 die als Nuten ausgebildeten Indexierungselemente 42. Die Nuten 42 enthalten jeweils gegenüberliegende Seitenwände 68, 69, welche in einem vorgegebenen, sich radial nach außen öffnenden Winkel 70 zueinander angeordnet sind. Der Winkel 70 ist vorteilhaft zumindest näherungsweise im Bereich von 30° vorgegeben. Die ersten Indexierungselemente 40 sind als Verzahnung integraler Bestandteil des Implantatkörpers 2. Der Implantatkörper 2 besitzt das Außengewinde 11, welches bei dieser Ausführungsform zumindest näherungsweise bis zum koronalen Ende 16 reicht, wobei ein gewindefreier Bereich nicht vorhanden ist. Alternativ kann, wie an Hand von Figur 1 erläutert, jedoch das Außengewinde vor dem koronalen Ende enden und der Implantatkörper 2 den genannten gewindefreien Bereich aufweisen. Dieser Sachverhalt trifft auch für die weiteren Ausführungsbeispiele zu. Des Weiteren können die verschiedenen Ausführungsformen des erfindungsgemäßen Dentalimplantats mit einer anderen Außengeometrie, insbesondere hinsichtlich des Außengewindes, ausgebildet sein, wobei an Stelle des dargestellten, im Wesentlichen konischen Gewindekerns das Gewinde und/oder der Gewindekern diskontinuierlich und/oder mit wenigstens einer Stufe ausgebildet sein können.

Fig. 10 zeigt eine weitere Ausgestaltung der Zahnkränze bzw. Indexierungselemente 40, 42. Hierbei sind die Seitenwände 68, 69 im wesentlichen parallel zueinander angeordnet. Es sei darauf hingewiesen, dass im Rahmen der Erfindung ferner Indexierungselemente bzw. Zahnkränze mit einer anderen Teilung bzw. Anzahl von Zähnen und/oder Nuten sowie Rippen liegen.

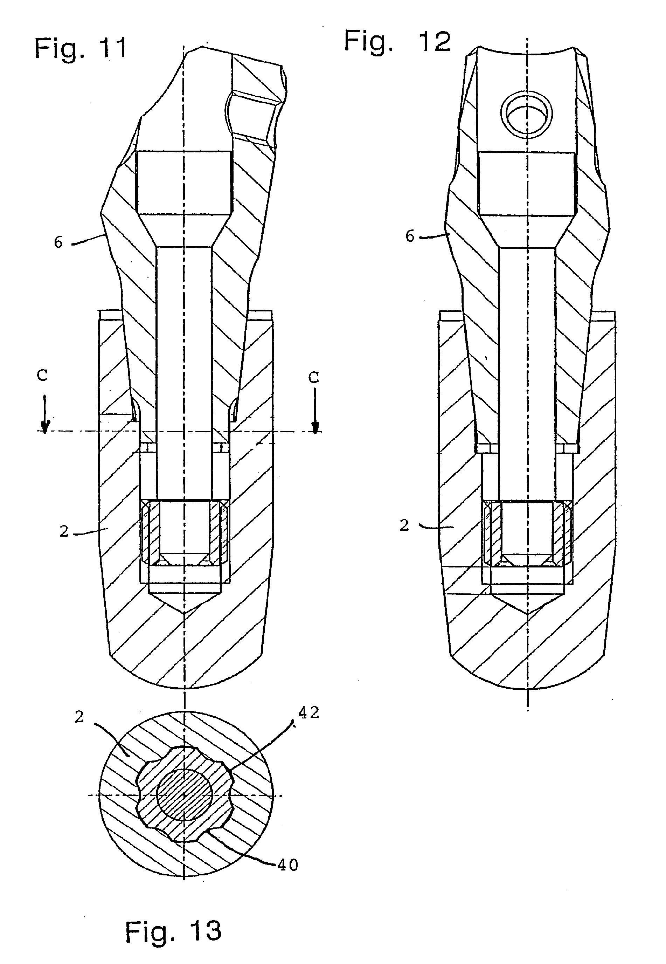

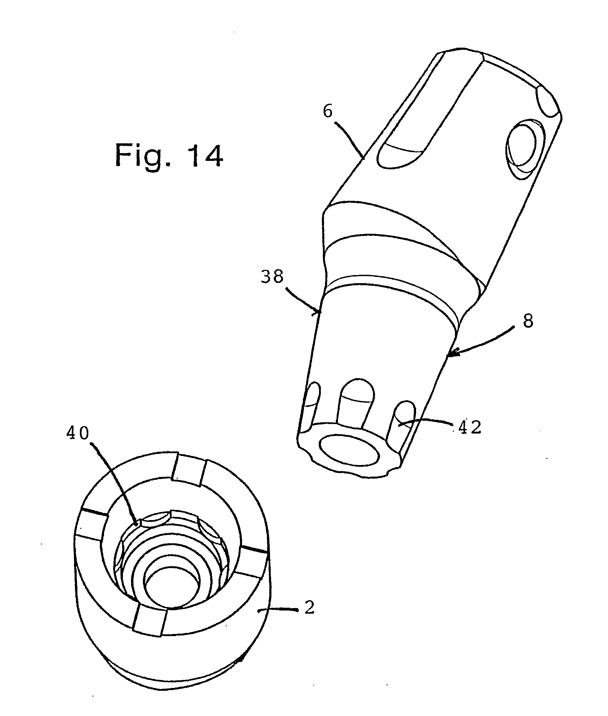

In der Ausführungsform des Dentalimplantats gemäß Fig. 11 bis 14, wobei Fig. 13 einen Schnitt entlang Schnittlinie C gemäß Fig. 11 zeigt, sind die Indexierungselemente 40, 42 wiederum als ineinander greifende Verzahnungen ausgebildet. Die Zähne bzw. Rippen und Nuten sind hierbei bogenförmig bzw. abgerundet mit vorgegebenen Radien ausgebildet. Wie aus Fig. 14 ersichtlich, sind auch bei dieser Ausführungsform die Nuten 42 des Zapfens 8 radial innerhalb der durch die konische Außenfläche 38 vorgegebenen Hüllkurve angeordnet.

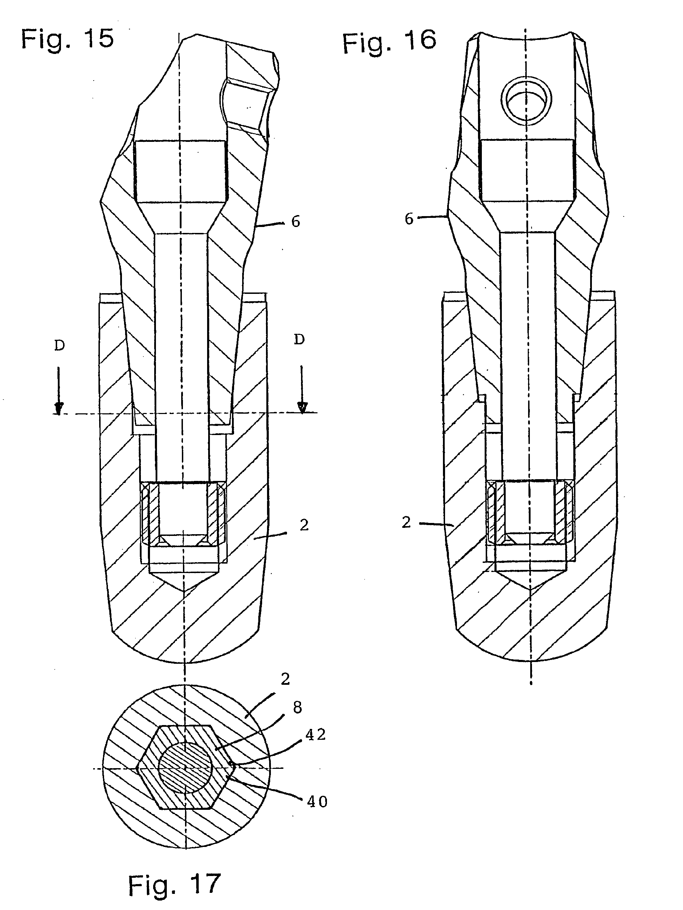

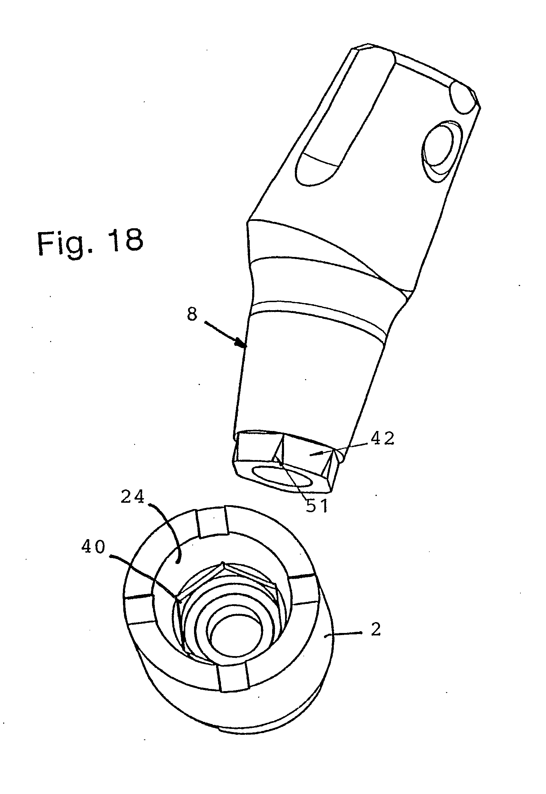

Schließlich enthält das Ausführungsbeispiel der Fig. 15 bis 18 als Sechskant ausgebildete Indexierungselemente 40, 42, wie insbesondere aus Fig. 17 ersichtlich, welche einen Schnitt entlang Schnittlinie D gemäß Fig. 15 zeigt. Gemäß Fig. 18 liegen die Indexierungselemente 42 des Zapfens 8 innerhalb der durch die konische Außenfläche 38 vorgegebenen Hüllkurve des Zapfens 8. Zwischen den Sechskantflächen der Indexierungselemente 42 sind gemäß Fig. 18 die konischen Flächenteile 51 vorhanden.

### Bezugszeichen

- 2: Implantatkörper
- 4: zentrale Aufnahmeöffnung in 2
- 6: Aufbauteil
- 8: Zapfen von 6
- 10: Außenfläche
- 11: Außengewinde
- 12: apikales Ende von 2
- 14: sphärische Endfläche von 2
- 16: koronales Ende von 2
- 17: gewindefreier Bereich von 10
- 18: Einsetzelement
- 20: Kopfbereich von 6
- 22: Längsachse
- 24: konische Innenfläche von 2
- 26: Innengewinde
- 28: Durchgangsbohrung in 6
- 30: Zugschraube
- 32: Gewindehülse
- 33: Innendurchmesser von 28
- 34: Schraubenkopf
- 36: Anlagefläche
- 38: konische Außenfläche von 8
- 40: erstes Indexierungselement / Rippe
- 42: zweites Indexierungselement / Nut
- 43: Abstand zwischen 40, 42 und 26, 32
- 44: apikaler Bereich von 6
- 46: Ringzone
- 47: Bereich von 11 mit reduzierter Gewindetiefe
- 48: Hülse
- 49: Wanddicke von 2 in 47
- 50: mittlerer Bereich
- 51: konischer Flächenteil von 38
- 52: Erstreckung von 42
- 53: Längskante von 42
- 54: Tiefe von 42
- 56: apikales Ende von 6
- 58: Rand von 48
- 60: Innenfläche von 48
- 62: Dicke von 40
- 64: Innendurchmesser von 48
- 66: Neigungswinkel
- 68, 69: Seitenrand von 42
- 70: Winkel

## Patentansprüche

1. Dentalimplantat, enthaltend einen Implantatkörper (2) mit einer zentralen Aufnahmeöffnung (4), ein Aufbauteil (6) mit einem in die Aufnahmeöffnung (4) eingreifenden Zapfen (8) sowie eine Zugschraube (30), welche durch eine Durchgangsbohrung (28) des Aufbauteils (6) hindurchgreift und in ein in der Aufnahmeöffnung (4) vorhandenes Innengewinde (26) eingeschraubt ist, wobei der Implantatkörper (2) Einsetzelemente (18) für ein Werkzeug zum Einsetzen in einen Kieferknochen aufweist und wobei mittels einer konischen Innenfläche (24) des Implantatkörpers (2) und einer an dieser unter Vorspannung anliegenden konischen Außenfläche (38) des Zapfens (8) eine Konusverbindung zur Rotationssicherung des Aufbauteils (6) bezüglich des Implantatkörpers (2) vorgegeben ist, wobei sich zumindest teilweise in den Bereich der konischen Außenfläche (38) des Zapfens (8) erstreckende erste und zweite Indexierungselemente (40, 42) zur Vorgabe der Rotationsposition des Aufbauteils (6) bezüglich des Implantatkörpers (2) angeordnet sind, wobei das wenigstens eine erste Indexierungselement (40) drehfest dem Implantatkörper (2) oder dem Aufbauteil (6) zugeordnet ist und wobei ferner wenigstens zwei zweite Indexierungselemente (42) dem Aufbauteil (6) oder dem Implantatkörper (2) drehfest zugeordnet sind,
**dadurch gekennzeichnet, dass** die Einsatzelemente (18) des Implantatkörpers (2) einerseits und die Indexierungselemente (40) andererseits unabhängig voneinander angeordnet und ausgebildet sind
und dass die Indexierungselemente (42) des Aufbauteils (6) in dessen apikalen Bereich (44) angeordnet sind und bis zum apikalen Ende (56) des Zapfens (8) reichen.

2. Dentalimplantat nach Anspruch 1, **dadurch gekennzeichnet, dass** axial zwischen dem koronalen Ende (16) des Implantatkörpers (2) und dem apikalen Bereich (44) mit den genannten Indexierungselementen (40, 42) eine Ringzone (46) vorhanden ist, in weicher die konische Außenfläche (38) des Zapfens (8) des Aufnahmeteils (6) über den gesamten Umfang an der konischen Innenfläche (24) des Implantatkörpers (2) anliegt, und / oder dass im apikalen Bereich (44) in Umfangsrichtung zwischen den Indexierungselementen (40, 42) die konische Außenfläche (38) an der konischen Innenfläche (24) anliegt.

3. Dentalimplantat nach Anspruch 1 oder 2, **dadurch gekennzeichnet, dass** der apikale Bereich (44) in einem vorgegebenen Abstand, bevorzugt entsprechend der axialen Länge der Ringzone (46), beabstandet zum koronalen Ende (16) des Implantatkörpers (2) und/oder der dort angeordneten Einsetzelement (18) vorgesehen ist.

4. Dentalimplantat nach einem der Ansprüche 1 bis 3, **dadurch gekennzeichnet, dass** die Indexierungselemente (40, 42) in einem vorgegebenen axialen Abstand (43) zum Innengewinde (26) des Implantatkörpers (2) und/oder dem Außengewinde, insbesondere der Gewindehülse (32), der Zugschraube (30) angeordnet sind.

5. Dentalimplantat nach einem der Ansprüche 1 bis 4, **dadurch gekennzeichnet, dass** das wenigstens eine erste Indexierungselement (40) als eine über die konische Fläche (24 oder 38) vorstehende Rippe ausgebildet ist, dass die wenigstens zwei zweiten Indexierungselemente (42) als Nuten in der konischen Fläche (38 oder 24) ausgebildet sind und/oder dass die Rippen (40) und Nuten (42) zur Längsachse (22) im Wesentlichen unter dem gleichen Winkel geneigt angeordnet sind wie die konische Innenfläche (24) und/oder die konische Außenfläche (38).

6. Dentalimplantat nach einem der Ansprüche 1 bis 5, **dadurch gekennzeichnet, dass** die Indexierungselemente (40, 42) Bestandteil eines separaten Körpers (48) sind, welcher drehfest, insbesondere unlösbar und/oder mittels fester Verbindung, mit dem Implantatkörper (2) und/oder dem Aufbauteil (6) verbunden ist, wobei der genannte Körper (48) bevorzugt als Hülse ausgebildet ist, welche insbesondere in einem mittleren Bereich (50) des Implantatkörpers (2) drehfest angeordnet ist, wobei an den mittleren Bereich (50) nach apikal bevorzugt das Innengewinde (26) der Aufnahmeöffnung (4) anschließt.

7. Dentalimplantat nach einem der Ansprüche 1 bis 6, **dadurch gekennzeichnet, dass** zur Verankerung im Kieferknochen der Implantatkörper (2) ein Außengewinde (11) mit Bereichen unterschiedlicher Gewindetiefe aufweist, wobei der Bereich (47) eine gegenüber der Gewindetiefe im nach apikal anschließenden und/oder dem apikalen Ende (12) des Implantatkörpers (2) zugeordneten Bereich eine reduzierte Gewindetiefe aufweist, und dass die radial innen liegenden Indexierungselemente (40, 42) zumindest teilweise dem genannten Bereich (47) mit reduzierter Gewindetiefe des Außengewindes (11) zugeordnet sind.

8. Dentalimplantat nach einem der Ansprüche 1 bis 7, **dadurch gekennzeichnet, dass** in Richtung zum koronalen Ende (16) des Implantatkörpers (2) anschließend an das Außengewinde (11) ein gewindefreier Bereich (17) vorgesehen ist und dass radial innen diesem gewindefreien Bereich (17) zumindest teilweise die Ringzone (46) zugeordnet ist, innerhalb weicher die konische Innenfläche (24) über den Umfang geschlossen ausgebildet ist und die konische Außenfläche (38) des Zapfens (8) flächig anliegt, und/oder dass die Ringzone (46) zumindest teilweise radial innerhalb des Bereiches angeordnet ist, in welchem radial außen das Außengewinde (11) des Gewindekörpers (2) eine reduzierte Gewindetiefe aufweist.

9. Dentalimplantat nach einem der Ansprüche 1 bis 8, **dadurch gekennzeichnet, dass** am apikalen Ende der Zugschraube (30) eine Gewindehülse (32) drehfest angeordnet ist, welche in das Innengewinde der zentralen Aufnahmeöffnung (4) des Implantatkörpers (2) eingreift, und dass der Außendurchmesser der Gewindehülse (32) größer ist als der Innendurchmesser (33) der Zugschraube (30).

10. Dentalimplantat nach einem der Ansprüche 1 bis 9, **dadurch gekennzeichnet, dass** die bevorzugt als Nuten ausgebildeten Indexierungselemente (42) des Zapfens (8) radial innerhalb einer Hüllkurve angeordnet sind, welche durch die konische Außenfläche (38) des Zapfens (8) vorgegeben ist.

11. Implantatsystem, **gekennzeichnet durch** zwei oder mehr Dentalimplantate nach einem der Ansprüche 1 bis 10, wobei die Implantatkörper (2) und / oder Aufnahmeelemente (6) in ihrer Außengeometrie abweichend von einander ausgebildet sein können, im Übrigen aufgrund übereinstimmender Ausbildung der zentralen Aufnahmeöffnungen (4) und der Zapfen (8) die Implantatkörper (2) und die Aufnahmeteile (6) beliebig miteinander kombinierbar und verbindbar sind.

12. Implantatsystem, enthaltend wenigstens ein den ersten Implantatkörper (2) aufweisendes Dentalimplantat nach einem der Ansprüche 1 bis 10, **dadurch gekennzeichnet, dass** wenigstens ein weiterer Implantatkörper vorgesehen ist, welcher kein Indexierungselement aufweist und welcher im Übrigen übereinstimmend mit oder abweichend von dem Implantatkörper (2) ausgebildet ist, wobei das wenigstens eine Aufbauteil (6) wahlweise mit dem das erste Indexierungselement (40) aufweisenden ersten Implantatkörper (2) oder mit dem weiteren Implantatkörper verbindbar ist.

13. Implantatsystem nach Anspruch 12, **dadurch gekennzeichnet, dass** eine Anzahl der ersten Art der das Indexierungselement (40) aufweisenden Implantatkörper vorgesehen sind, welche unterschiedlich, insbesondere in Länge und/oder Durchmesser ausgebildet sind, und dass ferner eine Anzahl der zweiten Art der Implantatkörper vorgesehen ist, welche keine Indexierungselemente aufweisen und welche unterschiedlich, insbesondere in Länge und/oder Durchmesser, ausgebildet sind.

14. Implantatsystem, enthaltend wenigstens ein erstes Aufbauteil (6) aufweisendes Dentalimplantat nach einem der Ansprüche 1 bis 10, **dadurch gekennzeichnet, dass** wenigstens ein weiteres Aufbauteil vorgesehen ist, welches kein Indexierungselement aufweist und welches im Übrigen übereinstimmend mit oder abweichend von dem ersten Aufbauteil (6) ausgebildet ist, wobei der wenigstens eine Implantatkörper (2) wahlweise mit dem ersten, das zweite Indexierungselement (42) aufweisenden Aufbauteil (6) oder mit dem weiteren Aufbauteil verbindbar ist.

15. Implantatsystem nach Anspruch 14, **dadurch gekennzeichnet, dass** eine Anzahl der ersten Art der das Indexierungselement (42) aufweisenden Aufnahmekörper (6) vorgesehen sind, weiche unterschiedlich, insbesondere in der Länge und/oder der -Abwinkelung der Kopfbereiche (20) bezüglich der Längsachse ausgebildet sind, und dass ferner eine Anzahl der zweiten Art der Aufbauteile vorgesehen ist, weiche keine Indexierungselemente (42) aufweisen und welche unterschiedlich, insbesondere in der Länge und/oder der Abwinkelung der Kopfbereiche (20) bezüglich der Längsachse (22), ausgebildet sind.

## Claims

1. A dental implant, containing an implant body (2) having a central receiving opening (4), a structural part (6) having a pin (8) engaging in the receiving opening (4), and also a tension screw (30), which passes through a through-bore (28) in the structural part (6) and is screwed into an inner thread (26) provided in the receiving opening (4), the implant body (2) comprising insert elements (18) for a tool for insertion into a jaw bone, and a cone connection for securing the structural part (6) against rotation with respect to the implant body (2) being defined by means of a conical inner surface (24) of the implant body (2) and a conical outer surface (38) of the pin (8) bearing against said conical inner surface under bias, first and second indexing elements (40, 42) for defining the rotational position of the structural part (6) with respect to the implant body (2) being arranged extending at least in part into the region of the conical outer surface (38) of the pin (8), the at least one first indexing element (40) being associated with the implant body (2) or the structural part (6) in a rotationally engaged manner, and at least two second indexing elements (42) further being associated with the structural part (6) or the implant body (2) in a rotationally engaged manner,
**characterised in that** the insert elements (18) of the implant body (2) on the one hand and the indexing elements (40) on the other hand are arranged and formed independently of one another,
and **in that** the indexing elements (42) of the structural part (6) are arranged in the apical region (44) thereof and reach as far as the apical end (56) of the pin (8).

2. The dental implant according to Claim 1, **characterised in that** an annular zone (46) is provided axially between the coronal end (16) of the implant body (2) and the apical region (44) with the mentioned indexing elements (40, 42), the conical outer surface (38) of the pin (8) of the structural part (6) bearing against the conical inner surface (24) of the implant body (2) over the entire periphery in said annular zone, and/or in that the conical outer surface (38) bears against the conical inner surface (24) in the apical region (44) in the peripheral direction between the indexing elements (40, 42).

3. The dental implant according to Claim 1 or 2, **characterised in that** the apical region (44) is distanced, at a predefined distance, preferably corresponding to the axial length of the annular zone (46), from the coronal end (16) of the implant body (2) and/or the insert elements (18) arranged there.

4. The dental implant according to one of Claims 1 to 3, **characterised in that** the indexing elements (40, 42) are arranged at a predefined axial distance (43) from the inner thread (26) of the implant body (2) and/or the outer thread, in particular the thread sleeve (32) of the tension screw (30).

5. The dental implant according to one of Claims 1 to 4, **characterised in that** the at least one first indexing element (40) is formed as a rib protruding beyond the conical surface (24 or 38), **in that** the at least two second indexing elements (42) are formed as grooves in the conical surface (38 or 24), and/or **in that** the ribs (40) and grooves (42) are inclined substantially at the same angle relative to the longitudinal axis (22) as the conical inner surface (24) and/or the conical outer surface (38).

6. The dental implant according to one of Claims 1 to 5, **characterised in that** the indexing elements (40, 42) are part of a separate body (48), which is connected in a rotationally engaged manner, in particular inseparably and/or by means of a fixed connection, to the implant body (2) and/or the structural part (6), the mentioned body (48) preferably being formed as a sleeve, which in particular is arranged in a central region (50) of the implant body (2) in a manner fixed against rotation, wherein the inner thread (26) of the receiving opening (4) preferably adjoins the central region (50) in the apical direction.

7. The dental implant according to one of Claims 1 to 6, **characterised in that**, for anchoring in the jaw bone, the implant body (2) comprises an outer thread (11) having regions of different thread depth, the region (47) having a reduced thread depth compared to the thread depth in the region adjoining in the apical direction and/or in the region associated with the apical end (12) of the implant body (2), and **in that** the radially inner indexing elements (40, 42) are associated at least in part with the mentioned region (47) of the outer thread (11) with reduced thread depth.

8. The dental implant according to one of Claims 1 to 7, **characterised in that** a thread-free region (17) is provided in the direction of the coronal end (16) of the implant body (2) adjoining the outer thread (11), and **in that**, radially inwardly, the annular zone (46) is associated at least in part with this thread-free region (17), the conical inner surface (24) being formed in said annular zone so as to be closed over the periphery and bearing in a planar manner against the conical outer surface (38) of the pin (8), and/or in that the annular zone (46) is arranged at least partly radially within the region in which the outer thread (11) of the threaded body (2) radially outwardly has a reduced thread depth.

9. The dental implant according to one of Claims 1 to 8, **characterised in that** a thread sleeve (32) is arranged at the apical end of the tension screw (30) in a rotationally engaged manner and engages in the inner thread of the central receiving opening (4) in the implant body (2), and **in that** the outer diameter of the thread sleeve (32) is larger than the inner diameter (33) of the tension screw (30).

10. The dental implant according to one of Claims 1 to 9, **characterised in that** the indexing elements (42), preferably formed as grooves, of the pin (8) are arranged radially within an envelope curve that is defined by the conical outer surface (38) of the pin (8).

11. An implant system, **characterised by** two or more dental implants according to one of Claims 1 to 10, wherein the implant body (2) and/or structural elements (6) may have different outer geometries, but, on account of a matching design of the central receiving openings (4) and of the pins (8), the implant body (2) and the structural parts (6) can be combined with one another and connected to one another as desired.

12. An implant system, containing at least one dental implant according to one of Claims 1 to 10 comprising the first implant body (2), **characterised in that** at least one further implant body is provided which has no indexing element and which for the rest is designed in a manner matching or different from the implant body (2), the at least one structural part (6) being selectively connectable to the first implant body (2) comprising the first indexing element (40) or to the further implant body.

13. The implant system according to Claim 12, **characterised in that** a number of the first type of implant bodies comprising the indexing element (40) are provided and are formed differently, in particular in terms of length and/or diameter, and **in that** a number of the second type of implant bodies is also provided, these having no indexing elements and being formed differently, in particular in terms of length and/or diameter.

14. An implant system, containing at least one dental implant according to one of Claims 1 to 10 comprising a first structural part (6), **characterised in that** at least one further structural part is provided which has no indexing element and which for the rest is formed in a manner matching or different from the first structural part (6), wherein the at least one implant body (2) is selectively connectable to the first structural part (6) comprising the second indexing element (42) or to the further structural part.

15. The implant system according to Claim 14, **characterised in that** a number of the first type of implant bodies (6) comprising the indexing element (42) are provided and are formed differently, in particular in terms of length and/or the offset of the head regions (20) with respect to the longitudinal axis, and **in that** a number of the second type of structural parts is also provided, these having no indexing elements (42) and being formed differently, in particular in terms of length and/or the offset of the head regions (20) with respect to the longitudinal axis (22).

## Revendications

1. Implant dentaire, comprenant un corps formant implant (2) avec une ouverture de réception centrale (4), une superstructure (6) avec une broche (8) venant en prise dans l'ouverture de réception (4), ainsi qu'une vis de tension (30) passant à travers un alésage traversant (28) de la superstructure (6) en étant vissée dans un taraudage (26) présent dans l'ouverture de réception (4), dans lequel le corps formant implant (2) présente des éléments d'insertion (18) pour un outil à insérer dans un os maxillaire, et dans lequel, au moyen d'une face intérieure conique (24) du corps formant implant (2) et d'une face extérieure conique (38) de la broche (8), appliquée contre celle-ci sous précontrainte, un assemblage conique est prédéfini pour le blocage en rotation de la superstructure (6) par rapport au corps formant implant (2), dans lequel des premier et deuxième éléments d'indexation (40, 42) s'étendant au moins en partie dans la zone de la face extérieure conique (38) de la broche (8) sont disposés pour prédéfinir la position de rotation de la superstructure (6) par rapport au corps formant implant (2), dans lequel ledit au moins un premier élément d'indexation (40) solidaire en rotation est attribué au corps formant implant (2) ou à la superstructure (6), et dans lequel en outre, au moins deux deuxièmes éléments d'indexation (42) solidaires en rotation sont attribués à la superstructure (6) ou au corps formant implant (2),
**caractérisé en ce que** les éléments d'insertion (18) du corps formant implant (2) d'une part et les éléments d'indexation (40) d'autre part sont disposés ou réalisés indépendamment les uns des autres,
et **en ce que** les éléments d'indexation (42) de la superstructure (6) sont disposés dans la zone apicale (44) de celle-ci en allant jusqu'à l'extrémité apicale (56) de la broche (8).

2. Implant dentaire selon la revendication 1, **caractérisé en ce qu'**il existe axialement entre l'extrémité coronale (16) du corps formant implant (2) et la zone apicale (44) avec lesdits éléments d'indexation (40, 42) une zone annulaire (46) dans laquelle la face extérieure conique (38) de la broche (8) de la superstructure (6) s'applique sur toute la circonférence contre la face intérieure conique (24) du corps formant implant (2), et/ou **en ce que** dans la zone apicale (44), dans la direction circonférentielle entre les éléments d'indexation (40, 42), la face extérieure conique (38) s'applique contre la face intérieure conique (24).

3. Implant dentaire selon la revendication 1 ou 2, **caractérisé en ce que** la zone apicale (44) est prévue à une distance prédéfinie correspondant de préférence à la longueur axiale de la zone annulaire (46) en étant espacée de l'extrémité coronale (16) du corps formant implant (2) et/ou des éléments d'insertion (18) disposés à cet endroit.

4. Implant dentaire selon l'une quelconque des revendications 1 à 3, **caractérisé en ce que** les éléments d'indexation (40, 42) sont disposés à une distance axiale (43) prédéfinie par rapport au taraudage (26) du corps formant implant (2) et/ou au filetage, en particulier à la douille filetée (32), de la vis de tension (30).

5. Implant dentaire selon l'une quelconque des revendications 1 à 4, **caractérisé en ce que** ledit au moins un premier élément d'indexation (40) est réalisé sous la forme d'une nervure dépassant de la surface conique (24 ou 38), **en ce que** lesdits au moins deux deuxièmes éléments d'indexation (42) sont réalisés sous la forme de rainures dans la surface conique (38 ou 24), et/ou **en ce que** les nervures (40) et les rainures (42) sont disposées en étant inclinées par rapport à l'axe longitudinale (22) substantiellement sous le même angle que la face intérieure conique (24) et/ou la face extérieure conique (38).

6. Implant dentaire selon l'une quelconque des revendications 1 à 5, **caractérisé en ce que** les éléments d'indexation (40, 42) font partie d'un corps séparé (48) qui est relié solidaire en rotation, en particulier de manière inamovible et/ou au moyen d'une connexion solidaire, au corps formant implant (2) et/ou à la superstructure (6), dans lequel ledit corps (48) est de préférence réalisé sous la forme d'une douille qui est disposée solidaire en rotation en particulier dans une zone intermédiaire (50) du corps formant implant (2), ladite zone intermédiaire (50) étant de préférence suivie du taraudage (26) de l'ouverture de réception (4) dans le sens apical.

7. Implant dentaire selon l'une quelconque des revendications 1 à 6, **caractérisé en ce que** pour l'ancrage dans l'os maxillaire, le corps d'implant (2) présente un filetage (11) avec des zones de différentes profondeurs de filetage, dans lequel la zone (47) présente une profondeur du pas réduite par rapport à la profondeur du pas dans la zone consécutive dans le sens apical et/ou attribuée à l'extrémité apicale (12) du corps formant implant (2), et **en ce que** les éléments d'indexation (40, 42) situés radialement à l'intérieur sont attribués au moins en partie à ladite zone (47) à profondeur du pas réduite du filetage (11).

8. Implant dentaire selon l'une quelconque des revendications 1 à 7, **caractérisé en ce que** dans la direction vers l'extrémité coronale (16) du corps formant implant (2) suivant le filetage (11), une zone sans filetage (17) est prévue, et **en ce que** radialement à l'intérieur, cette zone sans filetage (17) se voit attribuer au moins partiellement la zone annulaire (46) à l'intérieur de laquelle est réalisée la face intérieure conique (24) complètement sur la circonférence et la face extérieure conique (38) de la broche (8) s'applique de manière plane, et/ou **en ce que** la zone annulaire (46) est disposée au moins en partie radialement à l'intérieur de la zone dans laquelle, radialement à l'extérieur, le filetage (11) du corps fileté (2) présente une profondeur du pas réduite.

9. Implant dentaire selon l'une quelconque des revendications 1 à 8, **caractérisé en ce qu'**à l'extrémité apicale de la vis de tension (30), une douille filetée (32) est disposée solidaire en rotation qui vient en prise dans le taraudage de l'ouverture de réception centrale (4) du corps formant implant (2), et **en ce que** le diamètre extérieur de la douille filetée (32) est supérieur au diamètre intérieur (33) de la vis de tension (30).

10. Implant dentaire selon l'une quelconque des revendications 1 à 9, **caractérisé en ce que** les éléments d'indexation (42) de la broche (8), réalisés de préférence sous forme de rainures, sont disposés radialement à l'intérieur d'une enveloppante prédéfinie par la face extérieure conique (38) de la broche (8).

11. Système d'implant, **caractérisé par** deux ou plusieurs implants dentaires selon l'une quelconque des revendications 1 à 10, dans lequel les corps formant implant (2) et/ou les éléments de réception (6) peuvent être réalisés différemment les uns des autres quant à leur géométrie extérieure, les corps formant implant (2) et les superstructures (6) étant par ailleurs susceptibles d'être combinés et reliés librement entre eux grâce à une réalisant concordante des ouvertures de réception centrales (4) et des broches (8).

12. Système d'implant, comprenant au moins un implant dentaire selon l'une quelconque des revendications 1 à 10 et présentant le premier corps formant implant (2), **caractérisé en ce qu'**au moins un corps d'implant supplémentaire est prévu qui ne présente aucun élément d'indexation et qui est réalisé par ailleurs de manière concordante ou divergente par rapport au corps formant implant (2), dans lequel ladite au moins une superstructure (6) peut être au choix reliée au premier corps formant implant (2) présentant le premier élément d'indexation (40) ou au corps formant implant supplémentaire.

13. Système d'implant selon la revendication 12, **caractérisé en ce qu'**un certain nombre du premier type des corps formant implant présentant l'élément d'indexation (40) sont prévus qui sont réalisés de manière différente, en particulier quant à la longueur et/ou au diamètre, et **en ce qu'**en outre, un certain nombre du deuxième type des corps formant implant sont prévus qui ne présentent pas d'éléments d'indexation et qui sont réalisés de manière différente, en particulier quant à la longueur et/ou au diamètre.

14. Système d'implant, comprenant au moins un implant dentaire selon l'une quelconque des revendications 1 à 10 présentant une première superstructure (6), **caractérisé en ce qu'**au moins une superstructure supplémentaire est prévue qui ne présente aucun élément d'indexation et qui est par ailleurs réalisée de manière identique ou différente par rapport à la première superstructure (6), dans lequel ledit au moins un corps formant implant (2) peut être relié au choix à la première superstructure (6) présentant le deuxième élément d'indexation (42) ou à la superstructure supplémentaire.

15. Système d'implant selon la revendication 14, **caractérisé en ce qu'**un certain nombre du premier type des corps de réception (6) présentant l'élément d'indexation (42) sont prévus qui sont réalisés de manière différente, en particulier quant à la longueur et/ou au coude des zones de tête (20) par rapport à l'axe longitudinal, et **en ce qu'**en outre un certain nombre du deuxième type des superstructures sont prévus qui ne présentent aucun élément d'indexation (42) et qui sont réalisés de manière différente, en particulier quant à la longueur et/ou au coude des zones de tête (20) par rapport à l'axe longitudinal (22).
